# FASCICULE DE BREVET EUROPEEN

(11) **EP 4 107 382 B1**
(45) Date de publication et mention de la délivrance du brevet: **10.04.2024**
(21) Numéro de dépôt: 21710543.6
(22) Date de dépôt: 18.02.2021
(51) Int. Cl.: F02C 7/266

(54) **SURVEILLANCE DES ELEMENTS DE LA CHAMBRE DE COMBUSTION D'UN TURBOMOTEUR**
VERFAHREN ZUR ÜBERWACHUNG VON ELEMENTEN IN EINER TURBINENMOTORBRENNKAMMER
METHOD FOR MONITORING ELEMENTS IN A TURBINE ENGINE COMBUSTION CHAMBER

(30) Priorité: 21.02.2020 FR 2001733
(43) Date de publication de la demande: 28.12.2022
(73) Titulaire: SAFRAN AIRCRAFT ENGINES, 75015 Paris (FR)
(72) Inventeur: COUPARD, Josselin Xavier, 77550 MOISSY-CRAMAYEL (FR); DEMAISON, François, Maurice, Marcel, 77550 MOISSY-CRAMAYEL (FR); FACQUET, Valentin, Francis, Joël, 77550 MOISSY-CRAMAYEL (FR); JEDRUSZEK, Marion, Marguerite, 77550 MOISSY-CRAMAYEL (FR)
(74) Mandataire: Brevalex
(86) Numéro de dépôt international: PCT/FR2021/050286
(87) Numéro de publication internationale: WO 2021/165620

(56) Documents cités:
- FR-A1- 3 081 925
- US-A1- 2017 089 577

## Description

### Domaine technique

La présente invention concerne la surveillance de l'état de santé de pièces de turbomoteur d'aéronef. L'invention concerne plus particulièrement la surveillance des éléments du système d'allumage d'un turbomoteur d'aéronef.

### État de l'art antérieur

Le système d'allumage d'un turbomoteur comporte au moins une chambre de combustion dans laquelle une ou plusieurs bougies sont installées afin d'assurer l'allumage du jet de carburant qui est injecté dans la chambre de combustion. Les bougies sont excitées par un boîtier d'allumage lui-même commandé par un boîtier électronique, ou calculateur, généralement en charge de la régulation.

Le démarrage d'un turbomoteur d'aéronef est effectué selon une régulation prédéfinie, qui dépend de chaque moteur. La mise en route du moteur donne lieu à une succession d'étapes qui se caractérisent par des phénomènes vibratoires et acoustiques.

Les bougies sont utilisées pour allumer les chambres de combustion en produisant des étincelles qu'on appellera par la suite claquage. Cette étincelle se produit entre deux électrodes. A chaque claquage, des particules sont arrachées aux électrodes, ce qui provoque progressivement une usure.

Les bougies sont placées dans la flamme pendant le fonctionnement, ce qui peut produire de la corrosion et des dépôts de cokéfaction sur ces électrodes. De plus les particules fines en circulation dans le flux peuvent également provoquer une érosion.

Les bougies perdent donc en efficacité dans le temps jusqu'à ne plus produire assez d'énergie pour assurer l'allumage, ce qui introduit un retard sur le vol prévu. Pour éviter cela, les bougies sont changées en préventif sur la base d'un temps de fonctionnement fixe.

Les usures de bougies ne sont pas les seules causes de non allumage. Il peut y avoir également des pannes de boîtier d'allumage. Il faut donc fournir un travail d'investigation pour diagnostiquer la cause de non allumage.

L'objectif est multiple :
- Eviter les échecs d'allumage liés à une usure des bougies,
- Discriminer entre une panne de boîtier d'allumage et une usure de bougie en cas de non allumage,
- Eviter de changer les bougies trop tôt en déterminant l'instant optimal de remplacement.

Le mélange air/carburant injecté sur les bougies en phase de claquage enflamme la chambre de combustion. La flamme produite engendre un bruit caractéristique, basse fréquence qui permet de détecter l'allumage de la chambre.

Le bruit de hooting est un phénomène acoustique présent sur tous les moteurs avec une importance plus ou moins grande. C'est un bruit qui apparaît autour d'une basse fréquence, par exemple 290 Hz, et qui fait l'objet d'une insatisfaction client (non associé à une spécification). Le phénomène est identifié comme étant une instabilité de combustion au sein de la chambre de combustion. Il est susceptible d'apparaître lorsque la température de chambre est froide (égale à la température extérieure). Une étude du bruit de hooting peut mettre en évidence des fissures de chambre, ou des cas d'encrassement et de cokéfaction.

Différentes méthode de détermination de la santé d'un allumeur dans un moteur à turbine à gaz sont connues.

Selon un exemple, des capteurs de pression dynamique répondant aux fréquences acoustiques captent le son crée par l'allumeur pendant le processus d'allumage. Les caractéristiques spectrales des signaux captés sont ensuite analysées pour identifier une caractéristique spectrale pouvant être utilisée pour lier un modèle spectral à un état ou à une condition d'allumeur.

Selon un autre exemple, la surveillance de la santé des allumeurs de moteurs à turbine à gaz repose sur un comptage du nombre d'étincelles générées.

Il est aussi possible de calculer l'usure de l'allumeur d'un moteur à turbine à partir du temps d'allumage et de la pression dans la chambre de combustion.

Il est encore possible de détecter des impulsions de courant dans le blindage qui entoure un câble d'alimentation d'un allumeur, pour en déduire un signal indiquant la présence d'une étincelle dans l'allumeur.

La surveillance de la santé de chacune des bougies d'allumage et du circuit d'excitation dans un système d'allumage peut être effectuée en détectant des conditions anormales dans les formes d'onde du système de génération d'étincelles.

FR 2 968 143 a trait à la surveillance de la robustesse d'allumage de bougies soumises à des agressions électromagnétiques. Cette surveillance repose sur l'analyse des rayonnements lumineux émis par les bougies.

Le document FR 3 081 925 A1 divulgue un procédé de surveillance d'un système d'allumage d'un turbomoteur d'aéronef connu dans l'art antérieur.

### Exposé de l'invention

L'invention vise à résoudre les problèmes de la technique antérieure en fournissant un procédé de surveillance d'un système d'allumage d'un turbomoteur d'aéronef, le système d'allumage comportant au moins une chambre de combustion, au moins une bougie dans l'au moins une chambre de combustion, un boîtier d'allumage pour exciter l'au moins une bougie, le turbomoteur comportant au moins un accéléromètre et au moins un capteur acoustique, le procédé étant caractérisé en ce qu'il comporte des étapes de :
- acquisition de données accélérométriques et acoustiques représentatives de bruits de claquage de l'au moins une bougie, à partir de signaux produits par l'au moins un accéléromètre et l'au moins un capteur acoustique,
- détection d'instants de pics de claquage de l'au moins une bougie à partir des données accélérométriques et d'instants de pics de claquage de l'au moins une bougie à partir des données acoustiques représentatives de bruits de claquage de l'au moins une bougie,
- corrélation des instants des pics de claquage de l'au moins une bougie détectés à partir des données accélérométriques et des instants des pics de claquage de l'au moins une bougie détectés à partir des données acoustiques représentatives de bruits de claquage de l'au moins une bougie, et
- établissement d'un diagnostic de santé du boîtier d'allumage et d'un diagnostic de l'au moins une bougie, en fonction des résultats de l'étape de corrélation.

Grâce à l'invention, les données vibratoires et acoustiques sont corrélées pour améliorer la surveillance des bougies et du boîtier d'allumage, et de la capacité à démarrer du moteur.

L'invention permet d'éviter les échecs d'allumage liés à une usure des bougies.

En cas de non allumage, elle permet de discriminer entre une panne de boîtier d'allumage et une usure de bougie.

L'invention permet aussi d'éviter de changer les bougies trop tôt en déterminant l'instant optimal de remplacement.

Selon une caractéristique préférée, l'étape d'acquisition de données accélérométriques et acoustiques comporte une extraction du signal de claquage à partir des signaux produits par l'au moins un accéléromètre et l'au moins un capteur acoustique et un filtrage passe-bas des signaux produits par l'extraction.

De préférence, on utilise des capteurs dédiés à d'autres fonctions et déjà présent dans le turbomoteur.

Selon une caractéristique préférée, le procédé de surveillance comporte aussi une étape de pronostic de la durée de vie du boîtier d'allumage en fonction des résultats de l'étape de corrélation et d'un modèle d'endommagement du boîtier d'allumage.

Selon une caractéristique préférée, le procédé de surveillance comporte aussi une étape de pronostic de la durée de vie de l'au moins une bougie en fonction des résultats de l'étape de corrélation et d'un modèle d'endommagement de l'au moins une bougie.

Selon une caractéristique préférée, le procédé de surveillance comporte aussi des étapes de :
- test pour vérifier si la température de chambre de combustion est égale à la température ambiante extérieure, et en cas de réponse positive,
- extraction du signal correspondant à l'allumage à partir des signaux produits par l'au moins un capteur acoustique,
- application d'un filtre passe-bande au signal extrait, la bande de fréquence du filtre correspondant à des fréquences de phénomène de hooting,
- comparaison de l'énergie acoustique du signal filtré avec des énergies issues d'une base de référence, pour détecter ou non d'un bruit de hooting, et en cas de détection d'un bruit de hooting,
- établissement d'un diagnostic de la santé de la chambre de combustion.

Grâce à ces caractéristiques, il est possible de surveiller la chambre de combustion. Selon une caractéristique préférée, le procédé de surveillance comporte aussi une étape d'établissement d'un pronostic de la santé de la chambre de combustion.

L'invention concerne aussi un dispositif de surveillance d'un système d'allumage d'un turbomoteur d'aéronef, le système d'allumage comportant au moins une chambre de combustion, au moins une bougie dans l'au moins une chambre de combustion, un boîtier d'allumage pour exciter l'au moins une bougie, le turbomoteur comportant au moins un accéléromètre et au moins un capteur acoustique, le dispositif étant caractérisé en ce qu'il comporte une unité de traitement de données apte à acquérir des données accélérométriques et acoustiques représentatives de bruits de claquage de l'au moins une bougie, à partir de signaux produits par l'au moins un accéléromètre et l'au moins un capteur acoustique, détecter des instants de pics de claquage de l'au moins une bougie à partir des données accélérométriques et des instants de pics de claquage de l'au moins une bougie à partir des données acoustiques représentatives de bruits de claquage de l'au moins une bougie, corréler les instants des pics de claquage de l'au moins une bougie détectés à partir des données accélérométriques et les instants de pics de claquage de l'au moins une bougie détectés à partir des données acoustiques représentatives de bruits de claquage de l'au moins une bougie et établir un diagnostic de santé du boîtier d'allumage et d'un diagnostic de l'au moins une bougie, en fonction des résultats de l'étape de corrélation.

Selon une caractéristique préférée, l'unité de traitement de données est aussi apte à vérifier si la température de chambre de combustion est égale à la température ambiante extérieure, et en cas de réponse positive, extraire le signal correspondant à l'allumage à partir des signaux produits par l'au moins un capteur acoustique, appliquer un filtre passe-bande au signal extrait, la bande de fréquence du filtre correspondant à des fréquences de phénomène de hooting, comparer l'énergie acoustique du signal filtré avec des énergies issues d'une base de référence, pour détecter ou non d'un bruit de hooting, et en cas de détection d'un bruit de hooting, établir un diagnostic de la santé de la chambre de combustion.

L'invention concerne aussi un système d'allumage d'un turbomoteur d'aéronef, comportent le dispositif précédemment présenté.

Le dispositif et le système d'allumage présentent des avantages analogues à ceux précédemment présentés.

Dans un mode particulier de réalisation, les étapes du procédé selon l'invention sont mises en oeuvre par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en oeuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### Brève description des dessins

D'autres caractéristiques et avantages apparaîtront à la lecture de la description suivante d'un mode de réalisation préféré donné à titre d'exemple non limitatif, décrit en référence aux figures dans lesquelles :
[Fig. 1] illustre un dispositif de surveillance d'un système d'allumage d'un turbomoteur d'aéronef, selon un mode de réalisation de l'invention,
[Fig. 2] illustre une unité de traitement de données comprise dans le dispositif de la figure précédente, selon un mode de réalisation de l'invention,
[Fig. 3] illustre un procédé de surveillance d'un système d'allumage d'un turbomoteur d'aéronef, selon un mode de réalisation de l'invention,
[Fig. 4] illustre un signal issu d'un capteur acoustique compris dans le dispositif de la figure 1, selon un mode de réalisation de l'invention,
[Fig. 5] illustre un procédé de surveillance de la santé de la chambre de combustion, selon un mode de réalisation de l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

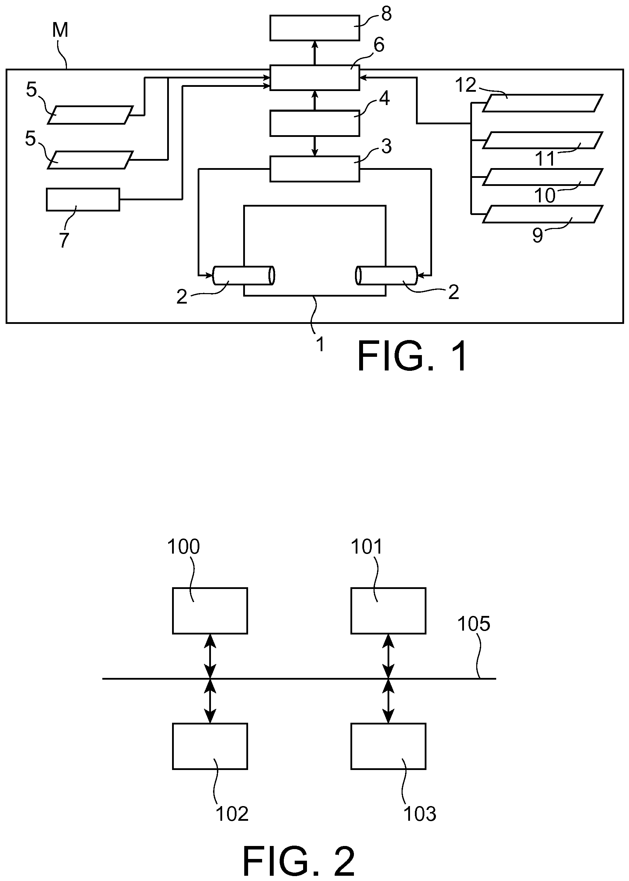

Selon un mode de réalisation préféré représenté à la **figure 1****,** le dispositif de surveillance d'un système d'allumage d'un turbomoteur d'aéronef équipe un turbomoteur M comprenant au moins une chambre de combustion 1 dans laquelle une ou plusieurs bougies 2 sont installées afin d'assurer l'allumage d'un mélange d'air et de carburant injecté dans la chambre de combustion. La ou les bougies 2 sont excitées par un boîtier d'allumage 3 configuré pour délivrer des impulsions de claquage à la ou aux bougies 2 sur réception d'une commande d'allumage fournie par un circuit de régulation de l'allumage 4.

Seuls les éléments utiles à la compréhension de l'invention sont décrits et représentés.

Le turbomoteur M est par ailleurs équipé d'un ou plusieurs capteurs de vibration 5, généralement deux accéléromètres afin d'assurer une redondance. Ces accéléromètres sont positionnés et utilisés en priorité pour capter le balourd du fan du turbomoteur.

Le premier accéléromètre est généralement positionné à l'avant du turbomoteur et le second plutôt à l'arrière du turbomoteur, souvent sur un carter afin de pouvoir être accessible en maintenance. L'arbre basse pression (BP) sur lequel est rattachée le fan du turbomoteur traverse tout le turbomoteur et un balourd basse pression s'exprime sur les différents roulements qui guident cet arbre, au moins un à l'avant et au moins un à l'arrière. La position exacte des accéléromètres varie d'un moteur à l'autre.

Les capteurs de vibration 5 sont reliés à une unité de traitement de données 6 embarquée au sein de l'aéronef pour lui fournir des signaux accélérométriques. Selon des variantes, l'unité de traitement de données 6 peut être intégrée ou non au sein du circuit de régulation 4. L'unité de traitement de données 6 est en charge de déterminer le niveau vibratoire à partir des signaux qu'elle reçoit. Ce niveau vibratoire est transmis au cockpit pour affichage sur le tableau de bord. Le pilote dispose ainsi des informations nécessaires pour réaliser l'équilibrage du moteur.

Les accéléromètres 5 peuvent également être utilisés pour réaliser une surveillance de l'usure de composants moteur comme les roulements.

Le turbomoteur M est aussi équipé d'un capteur acoustique 7, tel qu'un microphone. Le capteur acoustique 7 est placé autour du générateur de gaz, derrière une structure de manière à le protéger d'impacts de particules ou de la poussière. Le capteur acoustique 7 est relié à l'unité de traitement de données 6 pour lui fournir des signaux acoustiques. Ces signaux peuvent être utilisés pour surveiller les éléments tournants tels que les aubes des turbines et des compresseurs, mais également la transmission de puissance (engrenages) et la chambre de combustion.

Le turbomoteur M est aussi équipé d'autres capteurs, notamment un capteur de pression 9, un capteur de température 10, un capteur de vitesse de rotation 11 et un capteur de position des géométries variables 12. Ces capteurs sont eux aussi reliés à l'unité de traitement de données 6.

L'acquisition des signaux délivrés par les capteurs de vibration 5, le capteur acoustique 7 et les capteurs 9 à 12 est réalisée par l'unité de traitement de données 6. L'acquisition est de préférence réalisée à haute fréquence. L'unité de traitement de données 6 comporte un composant de calcul numérique (processeur ou FPGA) et des mémoires qui exécutent des traitements sur les signaux mesurés, typiquement du traitement du signal, de l'enregistrement et de la transmission d'information (fonction de communication).

Tout ou partie des traitements décrits dans la suite peut être effectuée au sol par un calculateur 8 adapté pour être relié à l'unité de traitement de données 6 lorsque l'aéronef est au sol.

La **figure 2** représente un mode de réalisation de l'unité de traitement de données 6. L'unité de traitement de données 6 a la structure générale d'un ordinateur. Elle comporte notamment un processeur 100 exécutant un programme d'ordinateur mettant en oeuvre le procédé selon l'invention, une mémoire 101, une interface d'entrée 102 et une interface de sortie 103.

Ces différents éléments sont classiquement reliés par un bus 105.

L'interface d'entrée 102 est reliée aux capteurs de vibration 5 et au capteur acoustique 7 et est destinée à recevoir les grandeurs mesurées.

Le processeur 100 exécute les traitements exposés dans la suite. Ces traitements sont réalisés sous la forme d'instructions de code du programme d'ordinateur qui sont mémorisées par la mémoire 101 avant d'être exécutées par le processeur 100.

La mémoire 101 mémorise les valeurs mesurées, les valeurs de référence et les diagnostics établis. La mémoire 101 peut être scindée en différentes parties pour séparer les instructions, les valeurs de référence et les valeurs mesurées.

L'interface de sortie 103 est reliée à l'au moins un parmi le FADEC du moteur, un autre système électronique embarqué de l'aéronef, et un système externe à l'aéronef pour délivrer les diagnostics établis.

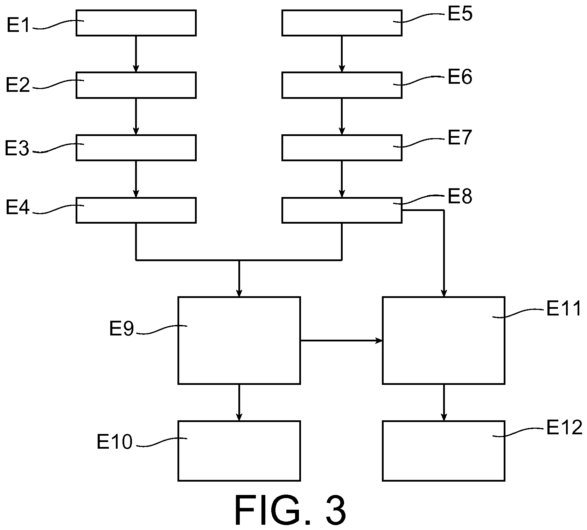

La **figure 3** représente un mode de réalisation du procédé de surveillance d'un système d'allumage d'un turbomoteur d'aéronef, en particulier des bougies 2 et du boîtier d'allumage 3. Ce procédé comporte des étapes E1 à E12 mises en oeuvre dans l'unité de traitement de données 6 ou en variante en partie dans l'unité de traitement de données 6 et en partie dans le calculateur 8. Ces étapes sont mises en oeuvre lorsque les bougies sont commandées pour leur claquage.

On décrit tout d'abord les étapes E1 à E4 mises en oeuvre pour traiter les signaux vibratoires.

L'étape E1 est l'acquisition des signaux délivrés par les capteurs de vibration 5.

L'étape suivante E2 est une extraction du signal de claquage des signaux acquis à l'étape précédente. Pour cela, les signaux acquis sont restreints aux périodes de temps où les bougies 2 sont commandées en claquage. Ces périodes de temps sont déterminées par le fait qu'elles correspondent aux périodes de temps pendant lesquelles :
- Le calculateur de régulation moteur envoie une commande au boîtier d'allumage 3 pendant toute la période pendant laquelle la bougie doit claquer. La commande comprend la sélection de la bougie ou des bougies à faire claquer;
- Le boîtier d'allumage 3 génère des signaux électriques envoyés périodiquement à la bougie ou aux bougies sélectionnée(s) afin de la ou les faire claquer.

L'étape suivante E3 est un filtrage passe-bas des signaux produits par l'étape précédente. En effet, le claquage des bougies produit des vibrations basse fréquence, les hautes fréquences sont donc éliminées des signaux traités.

Le filtrage passe-bas peut impliquer de sous-échantillonner le signal avec un filtre anti-repliement avant d'appliquer le filtre passe bas. Cela revient à cascader plusieurs filtres passe bas. Cela évite d'introduire des distorsions dans le cas où l'acquisition des signaux délivrés par les capteurs de vibration est faite à haute fréquence, par exemple plusieurs dizaines de kHz.

Selon une variante, il est possible d'utiliser un filtrage par ondelette, soit avec une ondelette standard, par exemple Daubechies, soit avec une ondelette spécifique basée sur la forme du claquage de bougie capté par les capteurs de vibration.

L'étape suivante E4 est une détection des pics de claquage dans les signaux filtrés. Il s'agit par exemple d'une détection des pics en tant qu'extrema locaux détectables par changement de signe de la dérivée du signal ou par passage au-dessus d'un seuil.

Selon une variante, il est possible de superposer le signal filtré au signal brut pour trouver le pic de signal brut correspondant au claquage de la bougie.

Le résultat de l'étape E4 est le nombre de pics de claquage, leur amplitude respective, leur instant d'apparition respectif et le temps entre deux claquages successifs.

Le procédé comporte des étapes E5 à E8 mises en oeuvre simultanément aux étapes E1 à E4, pour traiter les signaux acoustiques.

L'étape E5 est l'acquisition des signaux délivrés par le capteur acoustique 7.

L'étape suivante E6 est une extraction du signal de claquage des signaux acquis à l'étape précédente. Comme à l'étape E2, les signaux sont restreints aux périodes de temps où les bougies 2 sont commandées en claquage.

L'étape suivante E7 est un filtrage passe-bas des signaux produits par l'étape précédente. En effet, le claquage des bougies produit un bruit basse fréquence, les hautes fréquences sont donc éliminées des signaux traités.

L'étape suivante E8 est une détection des pics de claquage dans les signaux filtrés. Il s'agit par exemple d'une détection des pics en tant qu'extrema locaux détectables par changement de signe de la dérivée du signal ou sinon par passage au-dessus d'un seuil. Le résultat de l'étape E8 est le nombre de pics de claquage, leur amplitude respective, leur instant d'apparition respectif et le temps entre deux claquages successifs.

Les étapes E4 et E8 sont suivies de l'étape E9 qui est une comparaison des résultats des étapes E4 et E8.

Cette comparaison comporte une corrélation des instants d'apparition des pics de claquage issus des signaux accélérométriques et des instants d'apparition des pics de claquage issus des signaux acoustiques. Lorsque ces instants d'apparition correspondent, il y a validation des instants d'apparition des pics de claquage qui sont ainsi déterminés avec fiabilité. Les instants d'apparition des pics de claquage sur les signaux accélérométriques et acoustiques correspondent aux instants des claquages des bougies. L'étape E9 est suivie de l'étape E10 à laquelle les instants d'apparition des pics de claquage sur les signaux accélérométriques et acoustiques sont utilisés pour :
- diagnostiquer la santé du boîtier d'allumage,
- pronostiquer la durée de vie du boîtier d'allumage, en utilisant un modèle d'endommagement du boîtier d'allumage qui prend en compte l'environnement, des données antérieures et une vérification croisée avec l'autre moteur.

Les étapes E8 et E9 sont aussi suivies de l'étape E11 qui est une extraction d'un indicateur de puissance sonore associé à chaque pic de claquage validé à l'étape E9. Un indicateur de puissance sonore d'un pic est déterminé à partir de l'instant d'apparition du pic et de son amplitude.

L'étape E11 est suivie de l'étape E12 à laquelle les indicateurs de puissance sonore des pics sont utilisés pour :
- diagnostiquer la santé des bougies,
- pronostiquer la durée de vie de la bougie d'allumage en utilisant un modèle d'endommagement des bougies qui prend en compte l'environnement, des données antérieures et une vérification croisée avec l'autre moteur,
- détecter un remplacement de la bougie,
- estimer la qualité de l'opération de maintenance,
- détecter un défaut de fabrication d'une nouvelle bougie montée.

L'endommagement des bougies est directement lié au nombre de claquage qui créent un arrachement de particules et d'éléments qui vont pondérer cet endommagement (température, vitesses d'écoulement).

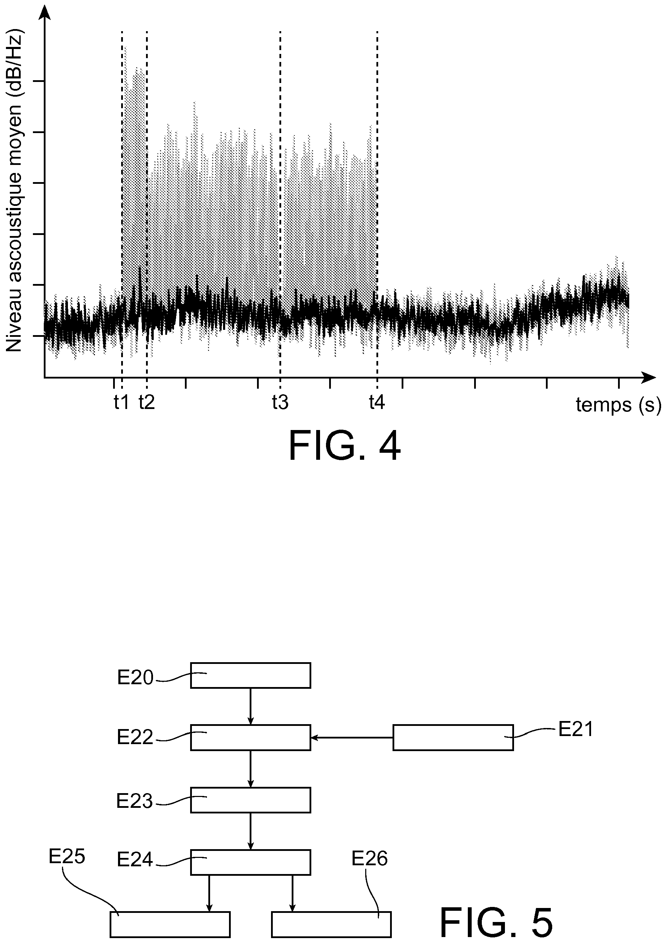

Les niveaux de puissance acoustique des pics dépendent de l'endommagement des bougies. On peut définir deux niveaux acoustiques moyens de claquage : un avant l'allumage de la chambre de combustion et un après l'allumage de la chambre de combustion. En effet, les claquages émettent plus de bruit avant l'allumage qu'après l'allumage. Cela permet également de surveiller ou de réguler l'allumage de la chambre. De surcroît, pour une certaine plage de régime, et suivant une condition de température, l'injection de carburant dans la chambre de combustion est interrompue par une logique dite de microcoupure. Pendant la microcoupure, le claquage des bougies est également interrompu, ce qui peut être confirmé par le capteur acoustique. La **Figure 4** illustre ce phénomène.

La **figure 4** représente le signal issu du capteur acoustique au moment du claquage des bougies.

Les claquages commencent à l'instant t1. Entre l'instant t1 et un instant t2, les niveaux acoustiques de claquage (exprimés en dB/Hz) sont plus élevés, ce qui correspond à l'intervalle de temps avant allumage de la chambre de combustion.

Les niveaux acoustiques de claquage sont plus faibles entre l'instant t2 et un instant t4 de fin des claquages.

Autour d'un instant t3 compris entre les instants t2 et t4, on constate une absence de signal acoustique, correspondant à une absence de claquage en raison d'une microcoupure.

L'évaluation d'un modèle d'endommagement, à partir des résultats des vols précédents et ceux mesurés sur le vol en cours peut comprendre le calcul de la vitesse d'écoulement du jet d'air dans la chambre de combustion pendant le claquage. Le jet d'air est estimé grâce à un modèle thermodynamique à partir des régimes de rotation du moteur, de la position des géométries variables, des pressions et températures mesurées au niveau fan et compresseur (éventuellement booster si disponible), et également des niveaux sonores associés à chaque pics. Ce modèle dépend du moteur.

Le procédé comprend l'utilisation d'un modèle d'endommagement à partir du nombre de claquages de chaque bougie, de la température mesurée à proximité de la chambre de combustion, des pressions mesurées à proximité de la chambre de combustion, de l'hygrométrie récupérable sur les rapports météo type METAR, de la vitesse d'écoulement calculée, du débit carburant injecté, du courant injecté par le boîtier d'allumage quand il est mesurable, ainsi que le temps passé à différentes températures et différents débits lorsque les bougies ne claquent pas.

La **figure 5** représente un mode de réalisation de procédé de surveillance de la santé de la chambre de combustion en fonction des signaux délivrés par le capteur acoustique 7. Ce procédé comporte des étapes E20 à E26 mises en oeuvre dans l'unité de traitement de données 6 ou en variante en partie dans l'unité de traitement de données 6 et en partie dans le calculateur 8. Ces étapes sont mises en oeuvre lorsque les bougies sont commandées pour leur claquage, simultanément aux étapes précédemment décrites. La surveillance de la santé de la chambre de combustion est réalisée par l'étude du phénomène de hooting. Au démarrage, lorsque la température de la chambre de combustion est initialement égale à la température ambiante extérieure, une instabilité de combustion génère un bruit de hululement, potentiellement gênant pour l'utilisateur. Les principes utilisés sont les suivant :
- Des endommagements de la chambre de combustion tels que des fissures génèrent des résonances inhabituelles, et un bruit de hooting anormalement intense,
- De l'encrassement de la chambre de combustion ou des phénomènes de cokéfactions génèrent une atténuation du bruit de hooting, et donc un niveau sonore anormalement bas.

L'étape E20 est l'acquisition des signaux délivrés par le capteur acoustique 7. Cette étape est identique à l'étape E5 précédemment décrite.

L'étape E21 est un test pour vérifier si le circuit de régulation de l'allumage 4 indique que la température de chambre T_{EGT} est égale à la température ambiante extérieure T_{ambiante}. Si la réponse est positive, alors les étapes E20 et E21 sont suivies de l'étape E22 qui est une extraction du signal correspondant à l'allumage à partir des signaux acoustiques acquis à l'étape E20. Cette étape est identique à l'étape E6 précédemment décrite. L'étape suivante E23 est l'application d'un filtre passe-bande au signal extrait à l'étape précédente. La bande de fréquence du filtre est choisie pour correspondre aux fréquences du phénomène de hooting attendu.

L'étape suivante E24 est une comparaison de l'énergie acoustique du signal filtré avec des énergies issues d'une base de référence. La base de référence comporte des données obtenues antérieurement, par exemple sur le même moteur et/ou sur des moteurs de même type.

La comparaison est une corrélation de spectre, ou une différence de PSD (power spectral density) afin de pouvoir établir la différence sur les énergies. L'évolution dans le temps de cette différence est surveillée et tant que le moteur est sain la dispersion observée doit être représentative des facteurs environnementaux uniquement. Le résultat de la comparaison est la détection ou non d'un bruit de hooting.

Si un phénomène de hooting est détecté, alors l'étape E24 est suivie de l'étape E25 qui est l'établissement d'un diagnostic de la santé de la chambre de combustion.

Si le phénomène de hooting détecté est moins intense, c'est-à-dire d'amplitude plus faible, que pour la base de référence, le diagnostic est que la chambre est encrassée ou qu'elle a subit des phénomènes de cokéfaction. Si le phénomène de hooting détecté est plus intense, c'est-à-dire d'amplitude plus élevée, que pour la base de référence et que des résonnances sont détectées, le diagnostic est une fissure de la chambre de combustion.

L'étape E24 est aussi suivie de l'étape E26 qui est l'établissement d'un pronostic de la santé de la chambre de combustion. Le pronostic détermine à l'avance une rupture de tendance dans l'évolution du phénomène de hooting dans le temps. Il est ainsi possible de prévoir un futur encrassement de la chambre de combustion ou une future fissure de la chambre de combustion.

## Revendications

1. Procédé de surveillance d'un système d'allumage d'un turbomoteur (M) d'aéronef, le système d'allumage comportant au moins une chambre de combustion (1), au moins une bougie (2) dans l'au moins une chambre de combustion, un boîtier d'allumage (3) pour exciter l'au moins une bougie, le turbomoteur comportant au moins un accéléromètre (5) et au moins un capteur acoustique (7), le procédé étant **caractérisé en ce qu'**il comporte des étapes de :
- **acquisition** (E2, E3, E6, E7) de données accélérométriques et acoustiques représentatives de bruits de claquage de l'au moins une bougie, à partir de signaux produits par l'au moins un accéléromètre et l'au moins un capteur acoustique,
- **détection** (E4, E8) d'instants de pics de claquage de l'au moins une bougie à partir des données accélérométriques et d'instants de pics de claquage de l'au moins une bougie à partir des données acoustiques représentatives de bruits de claquage de l'au moins une bougie,
- **corrélation** (E9) des instants des pics de claquage de l'au moins une bougie détectés à partir des données accélérométriques et des instants des pics de claquage de l'au moins une bougie détectés à partir des données acoustiques représentatives de bruits de claquage de l'au moins une bougie, et
- **établissement** (E10, E12) d'un diagnostic de santé du boîtier d'allumage et d'un diagnostic de l'au moins une bougie, en fonction des résultats de l'étape de corrélation.

2. Procédé de surveillance selon la revendication 1, dans lequel l'étape d'acquisition de données accélérométriques et acoustiques comporte une extraction (E2, E6) du signal de claquage à partir des signaux produits par l'au moins un accéléromètre et l'au moins un capteur acoustique et un filtrage passe-bas (E3, E7) des signaux produits par l'extraction.

3. Procédé de surveillance selon la revendication 1 ou 2, comportant aussi une étape de pronostic (E10) de la durée de vie du boîtier d'allumage en fonction des résultats de l'étape de corrélation et d'un modèle d'endommagement du boîtier d'allumage.

4. Procédé de surveillance selon l'une quelconque des revendications 1 à 3, comportant aussi une étape de pronostic (E12) de la durée de vie de l'au moins une bougie en fonction des résultats de l'étape de corrélation et d'un modèle d'endommagement de l'au moins une bougie.

5. Procédé de surveillance selon l'une quelconque des revendications 1 à 4, comportant aussi des étapes de :
- test (E21) pour vérifier si la température de chambre de combustion est égale à la température ambiante extérieure, et en cas de réponse positive,
- extraction (E22) du signal correspondant à l'allumage à partir des signaux produits par l'au moins un capteur acoustique,
- application (E23) d'un filtre passe-bande au signal extrait, la bande de fréquence du filtre correspondant à des fréquences de phénomène de hooting,
- comparaison (E24) de l'énergie acoustique du signal filtré avec des énergies issues d'une base de référence, pour détecter ou non un bruit de hooting, et en cas de détection d'un bruit de hooting,
- établissement (E25) d'un diagnostic de la santé de la chambre de combustion.

6. Procédé de surveillance selon la revendication 5, comportant aussi une étape d'établissement (E26) d'un pronostic de la santé de la chambre de combustion.

7. Dispositif de surveillance d'un système d'allumage d'un turbomoteur (M) d'aéronef, le système d'allumage comportant au moins une chambre de combustion (1), au moins une bougie (2) dans l'au moins une chambre de combustion, un boîtier d'allumage (3) pour exciter l'au moins une bougie, le turbomoteur comportant au moins un accéléromètre (5) et au moins un capteur acoustique (7), le dispositif étant **caractérisé en ce qu'**il comporte une unité de traitement de données (6) apte à **acquérir** des données accélérométriques et acoustiques représentatives de bruits de claquage de l'au moins une bougie, à partir de signaux produits par l'au moins un accéléromètre et l'au moins un capteur acoustique, **détecter** des instants de pics de claquage de l'au moins une bougie à partir des données accélérométriques et des instants de pics de claquage de l'au moins une bougie à partir des données acoustiques représentatives de bruits de claquage de l'au moins une bougie, **corréler** les instants des pics de claquage de l'au moins une bougie détectés à partir des données accélérométriques et les instants de pics de claquage de l'au moins une bougie détectés à partir des données acoustiques représentatives de bruits de claquage de l'au moins une bougie et **établir** un diagnostic de santé du boîtier d'allumage et d'un diagnostic de l'au moins une bougie, en fonction des résultats de l'étape de corrélation.

8. Dispositif de surveillance d'un système d'allumage d'un turbomoteur d'aéronef selon la revendication 7, dans lequel l'unité de traitement de données (6) est aussi apte à vérifier si la température de chambre de combustion (1) est égale à la température ambiante extérieure, et en cas de réponse positive, extraire le signal correspondant à l'allumage à partir des signaux produits par l'au moins un capteur acoustique, appliquer un filtre passe-bande au signal extrait, la bande de fréquence du filtre correspondant à des fréquences de phénomène de hooting, comparer l'énergie acoustique du signal filtré avec des énergies issues d'une base de référence, pour détecter ou non un bruit de hooting, et en cas de détection d'un bruit de hooting, établir un diagnostic de la santé de la chambre de combustion.

9. Système d'allumage d'un turbomoteur d'aéronef, **caractérisé en ce qu'**il comporte un dispositif de surveillance selon la revendication 7 ou 8.

10. Programme d'ordinateur comportant des instructions pour l'exécution des étapes du procédé selon l'une quelconque des revendications 1 à 6 lorsque ledit programme est exécuté par un ordinateur comportant une unité de traitement de données selon la revendication 7.

11. Support d'enregistrement lisible par un ordinateur comportant une unité de traitement de données selon la revendication 7 sur lequel est enregistré un programme d'ordinateur comprenant des instructions pour l'exécution des étapes du procédé selon l'une quelconque des revendications 1 à 6.

## Patentansprüche

1. Verfahren zur Überwachung eines Zündsystems für einen Turbomotor (M) eines Luftfahrzeugs, wobei das Zündsystem mindestens eine Brennkammer (1), mindestens eine Zündkerze (2) in der mindestens einen Brennkammer, eine Zündbox (3), um die mindestens eine Zündkerze zu erregen, umfasst, wobei der Turbomotor mindestens einen Beschleunigungsmesser (5) und mindestens einen akustischen Sensor (7) umfasst, wobei das Verfahren **dadurch gekennzeichnet ist, dass** es folgende Schritte umfasst:
- Erfassen (E2, E3, E6, E7) von beschleunigungsmesstechnischen und akustischen Daten, die für Durchschlaggeräusche der mindestens einen Zündkerze repräsentativ sind, anhand von Signalen, die von dem mindestens einen Beschleunigungsmesser und dem mindestens einen akustischen Sensor erzeugt werden,
- Erkennen (E4, E8) von Zeitpunkten von Durchschlagspitzen der mindestens einen Zündkerze anhand der beschleunigungsmesstechnischen Daten, und von Zeitpunkten von Durchschlagspitzen der mindestens einen Zündkerze anhand der akustischen Daten, die für Durchschlaggeräusche der mindestens einen Zündkerze repräsentativ sind,
- Korrelieren (E9) der Zeitpunkte der Durchschlagspitzen der mindestens einen Zündkerze, die anhand der beschleunigungsmesstechnischen Daten erkannt wurden, und der Zeitpunkte der Durchschlagspitzen der mindestens einen Zündkerze, die anhand der akustischen Daten erkannt wurden, die für Durchschlaggeräusche der mindestens einen Zündkerze repräsentativ sind, und
- Erstellen (E10, E12) einer Diagnose des Zustands der Zündbox und einer Diagnose der mindestens einen Zündkerze in Abhängigkeit von den Ergebnissen des Korrelationsschritts.

2. Überwachungsverfahren nach Anspruch 1, wobei der Schritt des Erfassens von beschleunigungsmesstechnischen und akustischen Daten ein Extrahieren (E2, E6) des Durchschlagsignals anhand der von dem mindestens einen Beschleunigungsmesser und dem mindestens einen akustischen Sensor erzeugten Signale, und eine Tiefpassfilterung (E3, E7) der durch das Extrahieren erzeugten Signale umfasst.

3. Überwachungsverfahren nach Anspruch 1 oder 2, das auch einen Schritt des Prognostizierens (E10) der Lebensdauer der Zündbox in Abhängigkeit von den Ergebnissen des Korrelationsschritts und einem Beschädigungsmodell der Zündbox umfasst.

4. Überwachungsverfahren nach einem der Ansprüche 1 bis 3, das auch einen Schritt des Prognostizierens (E12) der Lebensdauer der mindestens einen Zündkerze in Abhängigkeit von den Ergebnissen des Korrelationsschritts und einem Beschädigungsmodell der mindestens einen Zündkerze umfasst.

5. Überwachungsverfahren nach einem der Ansprüche 1 bis 4, das auch folgende Schritte umfasst:
- Testen (E21), um zu verifizieren, ob die Temperatur der Brennkammer gleich der äußeren Umgebungstemperatur ist, und im Falle einer positiven Antwort,
- Extrahieren (E22) des Signals, das der Zündung entspricht, anhand der von dem mindestens einen akustischen Sensor erzeugten Signale,
- Anwenden (E23) eines Bandpassfilters auf das extrahierte Signal, wobei das Frequenzband des Filters Heulphänomen-Frequenzen entspricht,
- Vergleichen (E24) der akustischen Energie des gefilterten Signals mit Energien aus einer Referenzdatenbank, um ein Heulgeräusch zu erkennen oder nicht, und im Falle des Erkennens eines Heulgeräuschs,
- Erstellen (E25) einer Diagnose des Zustands der Brennkammer.

6. Überwachungsverfahren nach Anspruch 5, das auch einen Schritt des Erstellens (E26) einer Prognose des Zustands der Brennkammer umfasst.

7. Vorrichtung zur Überwachung eines Zündsystems für einen Turbomotor (M) eines Luftfahrzeugs, wobei das Zündsystem mindestens eine Brennkammer (1), mindestens eine Zündkerze (2) in der mindestens einen Brennkammer, eine Zündbox (3), um die mindestens eine Zündkerze zu erregen, umfasst, wobei der Turbomotor mindestens einen Beschleunigungsmesser (5) und mindestens einen akustischen Sensor (7) umfasst, wobei die Vorrichtung **dadurch gekennzeichnet ist, dass** sie eine Datenverarbeitungseinheit (6) umfasst, die in der Lage ist, anhand von Signalen, die von dem mindestens einen Beschleunigungsmesser und dem mindestens einen akustischen Sensor erzeugt werden, beschleunigungsmesstechnische und akustische Daten zu erfassen, die für Durchschlaggeräusche der mindestens einen Zündkerze repräsentativ sind, Zeitpunkte von Durchschlagspitzen der mindestens einen Zündkerze anhand der beschleunigungsmesstechnischen Daten, und Zeitpunkte von Durchschlagspitzen der mindestens einen Zündkerze anhand der akustischen Daten, die für Durchschlaggeräusche der mindestens einen Zündkerze repräsentativ sind, zu erkennen, die Zeitpunkte der Durchschlagspitzen der mindestens einen Zündkerze, die anhand der beschleunigungsmesstechnischen Daten erkannt wurden, und die Zeitpunkte von Durchschlagspitzen der mindestens einen Zündkerze, die anhand der akustischen Daten erkannt wurden, die für Durchschlaggeräusche der mindestens einen Zündkerze repräsentativ sind, zu korrelieren und in Abhängigkeit von den Ergebnissen des Korrelationsschritts eine Diagnose des Zustands der Zündbox und eine Diagnose der mindestens einen Zündkerze zu erstellen.

8. Vorrichtung zur Überwachung eines Zündsystems für einen Turbomotor eines Luftfahrzeugs nach Anspruch 7, wobei die Datenverarbeitungseinheit (6) auch in der Lage ist, zu verifizieren, ob die Temperatur der Brennkammer (1) gleich der äußeren Umgebungstemperatur ist, und im Falle einer positiven Antwort das Signal, das der Zündung entspricht, anhand der von dem mindestens einen akustischen Sensor erzeugten Signale zu extrahieren, einen Bandpassfilter auf das extrahierte Signal anzuwenden, wobei das Frequenzband des Filters Heulphänomen-Frequenzen entspricht, die akustische Energie des gefilterten Signals mit Energien aus einer Referenzdatenbank zu vergleichen, um ein Heulgeräusch zu erkennen oder nicht, und im Falle des Erkennens eines Heulgeräuschs eine Diagnose des Zustands der Brennkammer zu erstellen.

9. Zündsystem für einen Turbomotor eines Luftfahrzeugs, **dadurch gekennzeichnet, dass** es eine Überwachungsvorrichtung nach Anspruch 7 oder 8 umfasst.

10. Computerprogramm, das Anweisungen zum Ausführen der Schritte des Verfahrens nach einem der Ansprüche 1 bis 6 umfasst, wenn das Programm von einem Computer ausgeführt wird, der eine Datenverarbeitungseinheit nach Anspruch 7 umfasst.

11. Von einem Computer lesbares Aufzeichnungsmedium, das eine Datenverarbeitungseinheit nach Anspruch 7 umfasst, auf dem ein Computerprogramm aufgezeichnet ist, das Anweisungen zum Ausführen der Schritte des Verfahrens nach einem der Ansprüche 1 bis 6 umfasst.

## Claims

1. Method for monitoring an ignition system of an aircraft turbine engine (M), the ignition system including at least one combustion chamber (1), at least one spark plug (2) in the at least one combustion chamber, an ignition exciter box (3) to excite the at least one spark plug, the turbine engine including at least one accelerometer (5) and at least one acoustic sensor (7), the method being **characterised in that** it includes steps of:
- acquiring (E2, E3, E6, E7) accelerometric and acoustic data representative of breakdown noises of the at least one spark plug, on the basis of signals produced by the at least one accelerometer and the at least one acoustic sensor,
- detecting (E4, E8) times of breakdown peaks of the at least one spark plug on the basis of the accelerometric data and times of breakdown peaks of the at least one spark plug on the basis of the acoustic data representative of breakdown noises of the at least one spark plug,
- correlating (E9) the times of the breakdown peaks of the at least one spark plug detected on the basis of the accelerometric data and the times of the breakdown peaks of the at least one spark plug detected on the basis of the acoustic data representative of breakdown noises of the at least one spark plug, and
- establishing (E10, E12) a diagnosis of health of the ignition exciter box and a diagnosis of the at least one spark plug, according to the results of the correlation step.

2. Monitoring method according to claim 1, wherein the step of acquiring accelerometric and acoustic data includes an extraction (E2, E6) of the breakdown signal from the signals produced by the at least one accelerometer and the at least one acoustic sensor and a low-pass filtering (E3, E7) of the signals produced by the extraction.

3. Monitoring method according to claim 1 or 2, also including a step of forecasting (E10) the service life of the ignition exciter box according to the results of the correlation step and a model of damage to the ignition exciter box.

4. Monitoring method according to anyone of claims 1 to 3, also including a step of forecasting (E12) the service life of the at least one spark plug according to the results of the correlation step and a model of damage to the at least one spark plug.

5. Monitoring method according to anyone of claims 1 to 4, also including steps of:
- testing (E21) to verify whether the combustion chamber temperature is equal to the outside ambient temperature, and in the case of a positive answer,
- extracting (E22) the signal corresponding to the ignition on the basis of the signals produced by the at least one acoustic sensor,
- applying (E23) a band-pass filter to the extracted signal, the frequency band of the filter corresponding to hooting phenomenon frequencies,
- comparing (E24) the acoustic energy of the filtered signal to energies coming from a reference database, to detect a hooting noise or not, and in the case of detection of a hooting noise,
- establishing (E25) a diagnosis of the health of the combustion chamber.

6. Monitoring method according to claim 5, also including a step of establishing (E26) a forecast of the health of the combustion chamber.

7. Device for monitoring an ignition system of an aircraft turbine engine (M), the ignition system including at least one combustion chamber (1), at least one spark plug (2) in the at least one combustion chamber, an ignition exciter box (3) to excite the at least one spark plug, the turbine engine including at least one accelerometer (5) and at least one acoustic sensor (7), the device being **characterised in that** it includes a data processing unit (6) capable of acquiring accelerometric and acoustic data representative of breakdown noises of the at least one spark plug, on the basis of signals produced by the at least one accelerometer and the at least one acoustic sensor, detecting times of breakdown peaks of the at least one spark plug on the basis of the accelerometric data and times of breakdown peaks of the at least one spark plug on the basis of the acoustic data representative of breakdown noises of the at least one spark plug, correlating the times of the breakdown peaks of the at least one spark plug detected on the basis of the accelerometric data and the times of breakdown peaks of the at least one spark plug detected on the basis of the acoustic data representative of breakdown noises of the at least one spark plug and establishing a diagnosis of health of the ignition exciter box and a diagnosis of the at least one spark plug, according to the results of the correlation step.

8. Device for monitoring an ignition system of an aircraft turbine engine according to claim 7, wherein the data processing unit (6) is also capable of verifying whether the combustion chamber (1) temperature is equal to the outside ambient temperature, and in the case of a positive response, extracting the signal corresponding to the ignition on the basis of the signals produced by the at least one acoustic sensor, applying a band-pass filter to the extracted signal, the frequency band of the filter corresponding to hooting phenomenon frequencies, comparing the acoustic energy of the filtered signal to energies coming from a reference database, to detect a hooting noise or not, and in the case of detection of a hooting noise, establishing a diagnosis of the health of the combustion chamber.

9. Ignition system of an aircraft turbine engine, **characterised in that** it includes a monitoring device according to claim 7 or 8.

10. Computer program including instructions for the execution of the steps of the method according to anyone of claims 1 to 6 when said program is executed by a computer comprising a data processing unit according to claim 7.

11. Information support readable by a computer comprising a data processing unit according to claim 7, on which a computer program comprising instructions for the execution of the steps of the method according to anyone of claims 1 to 6 is recorded.
